Europäisches Patentamt

European Patent Office

Office européen des brevets

(19)

(11) Publication number: **0 036 654**
**B1**

(12) **EUROPEAN PATENT SPECIFICATION**

(45) Date of publication of patent specification: **30.05.84**

(51) Int. Cl.³: **B 01 J 8/12 // C10G35/12**

(21) Application number: **81102142.7**

(22) Date of filing: **21.03.81**

(54) **Method for the recovery of regenerated catalyst and flow dampener utilized in the method.**

(30) Priority: **24.03.80 US 132969**
**24.03.80 US 132970**

(43) Date of publication of application:
**30.09.81 Bulletin 81/39**

(45) Publication of the grant of the patent:
**30.05.84 Bulletin 84/22**

(84) Designated Contracting States:
**AT BE DE FR GB IT NL SE**

(56) References cited:
**FR-A-1 531 685**
**US-A-2 883 334**
**US-A-3 652 231**

(73) Proprietor: **UOP Inc.**
**10 UOP Plaza Algonquin & Mt. Prospect Roads**
**Des Plaines Illinois 60016 (US)**

(72) Inventor: **Greenwood, Arthur Raymond**
**8201 Elmore Street**
**Niles Illinois (US)**

(74) Representative: **Weber, Dieter, Dr. et al**
**Dr. Dieter Weber und Klaus Seiffert**
**Patentanwälte Gustav-Freytag-Strasse 25**
**D-6200 Wiesbaden 1 (DE)**

Courier Press, Leamington Spa, England.

## Description

With regard to most hydrocarbon conversion processes effected in contact with a particulate catalyst, it is quite conventional to provide means for the periodic regeneration of the catalyst particles. However, in connection with the catalytic reforming of a naphtha or other suitable hydrocarbon feedstock, most of the process units have heretofore operated with a fixed catalyst bed over long periods of time without making provision for periodic regeneration or reconditioning of the catalyst. At such times as reconditioning appeared to be warranted, the reforming reactors were shut down and the entire catalyst inventory removed and replaced with new catalyst, or with catalyst which had been reconditioned at a remote facility. Alternatively, certain reforming operations have been designed to include a swing-reactor, i.e. an extra reactor, and in addition, a rather eleborate piping system so that one reactor at a time could be taken out of service to undergo in-situ regeneration of the catalyst contained therein. Neither the complete catalyst change nor the swing-reactor method of regeneration provide a really satisfactory system for maintaining a desired level of a catalyst activity coupled with high conversions in multiple bed reforming reactors. As a result, it has been found to be of advantage to provide for a moving bed catalytic reforming system interacting with a moving bed regeneration system to achieve an optimum overall continuously operating reforming process. The moving bed regeneration system herein contemplated will typically comprise a moving bed of catalyst particles gravitating through a carbon burn-off/halogenation section, and finally through a drying section of a vertically elongated confined chamber. U.S. patent Nos. 3 470 090, 3 647 680, 3 785 963, 3 652 231, and 3 981 824 are further descriptive of the continuous catalytic reforming and regeneration process.

In practice, the progress of the catalyst particles gravitating through the regenerator column, i.e., the residence time, is determined by a periodic discharge of a measured volume of hot regeneration catalyst particles from the bottom of the column into a catalyst hopper. The periodic discharge is preferred to a continuous discharge in that it requires much simpler hardware and minimizes catalyst attrition. Regenerated catalyst then accumulates in the catalyst hopper for eventual recycle to the top of the reforming reactor to maintain a predetermined catalyst level therein. To facilitate the transfer of the hot particles from the regenerator column to the catalyst hopper, the hopper is typically vented to the column through a pressure equalizer line.

A heretofore undetected pressure surge has recently been observed in the regenerator column having the potential to cause excessive temperatures detrimental to the catalyst particles contained therein. It has now been determined that the pressure surge results from the described periodic discharge of hot regenerated catalyst particles, typically at about 427°C, into contact with the substantially cooler vapors, e.g., 93°C, which occur in the catalyst hopper. The effect is a momentary pressure increase in the catalyst hopper due to the thermal expansion of said vapors, and a resultant flow of said vapor through the pressure equalizer line into the regenerator column. Generally, the hot particles are discharged into the catalyst hopper for only about 15 seconds of a 60-second cycle. Thus, as soon as the flow of hot particles into the catalyst hopper has terminated, the pressure begins to subside due to heat loss and the resultant thermal contraction of said vapors, and there is a flow reversal in the pressure equalizer line. As this cycle repeats itself, air drawn through the pressure equalizer line during said flow reversal is re-injected into the burning section of the regenerator column, and the oxygen concentration therein becomes momentarily excessive as does the temperature.

It is therefore an object of this invention to provide a novel flow dampener apparatus for the recovery of hot regenerated catalyst particles from a moving bed regenerator column, said flow dampener having the effect of substantially obviating pressure surges in said regenerator column.

This object of the invention is solved by a method for the recovery of hot regenerated catalyst particles from a moving bed regenerator column by periodical discharge of a measured volume of said hot particles from said regenerator column into an enclosed flow dampener situated inside a catalyst hopper of substantially larger volume, which method is characterized in that the used flow dampener comprises a catalyst hold-up chamber and a bottom-located outlet means to said catalyst hopper, said catalyst hold-up chamber being in open communication with said bottom-located outlet means through a plurality of vertically spaced-apart outlet means; the outlet means in any substantially horizontal plane being sized to accommodate up to 50% of the average rate at which said hot particles are discharged into said catalyst hold-up chamber; said vertically spaced apart outlet means being vertically spaced apart to provide a minimum particle hold-up volume substantially equal to the aforesaid measured volume periodically discharged into said catalyst hold-up chamber in order to facilitate a substantially continuous flow of hot catalyst discharged from said catalyst hold-up chamber into said catalyst hopper.

In such a method of substantially continuous flow of hot catalyst particles is discharged from said catalyst hold-up chamber into said catalyst hopper.

The invention is also directed to a flow dampener suitable for the use in said method and characterized as above.

According to one preferred embodiment of the invention the catalyst hold-up chamber of said flow dampener comprises an open-ended standpipe containing the plurality of vertically spaced apart outlet means. Suitably, the said standpipe comprises four vertically spaced apart outlet means.

Furthermore, it is preferred that said standpipe comprises four vertically spaced apart outlet means, the lowermost of which is sized to accommodate a particle flow rate 50% of the average rate at which said particles are discharged into said flow dampener, and the remaining outlets are individually sized to accommodate a particle flow rate 25% of the average rate at which said particles are discharged into said flow dampener.

According to another preferred embodiment of the invention the flow dampener comprises a cylindrical vessel containing a pair of chordal form catalyst passageways defined by the peripheral side-walls of said vessel and a pair of spaced apart chordal baffles containing the plurality of vertically spaced apart outlet means and disposed on opposite sides of a plane containing the central axis of said vessel and parallel thereto; and a central catalyst hold-up chamber for receiving said periodic particle discharge and defined by said chordal baffles and the peripheral side-walls of said vessel which are not in common with said chordal-form catalyst passageways, the upper periphery of said chordal baffles being a finite vertical distance below the peripheral upper surface of said vessel and the lower peripheral surface of said vessel consisting of a horizontal plate attached to the lower periphery of said chordal baffles and extending between the lower periphery of said side-walls not common to said chordal-form catalyst passageways. Also in this embodiment said chordal baffles contain four horizontally opposed pairs of vertically spaced apart outlet means.

According to a further preferred embodiment said chordal baffles contain four horizontally opposed pairs of the vertically spaced apart outlet means, the lowermost pair of horizontally opposed outlet means being sized to accommodate, in combination, 50% of the average flow rate at which said catalyst particles are discharged into said catalyst hold-up chamber, and each of the remaining pairs of horizontally opposed outlet means being sized to accommodate a particle flow rate 25% of the average rate at which said particles are discharged into said catalyst hold-up chamber.

In the attached drawing;

Fig. 1 represents a cross-sectional view of the flow dampener vessel according to a preferred embodiment of this invention,

Fig. 2 represents an overhead view taken approximately along line 2—2 of Fig. 1,

Fig. 3 depicts the flow dampener apparatus of Fig. 1 and 2 situated in the catalyst hopper enclosed to a moving bed regenerator column, and

Fig. 4 represents another embodiment of the invention.

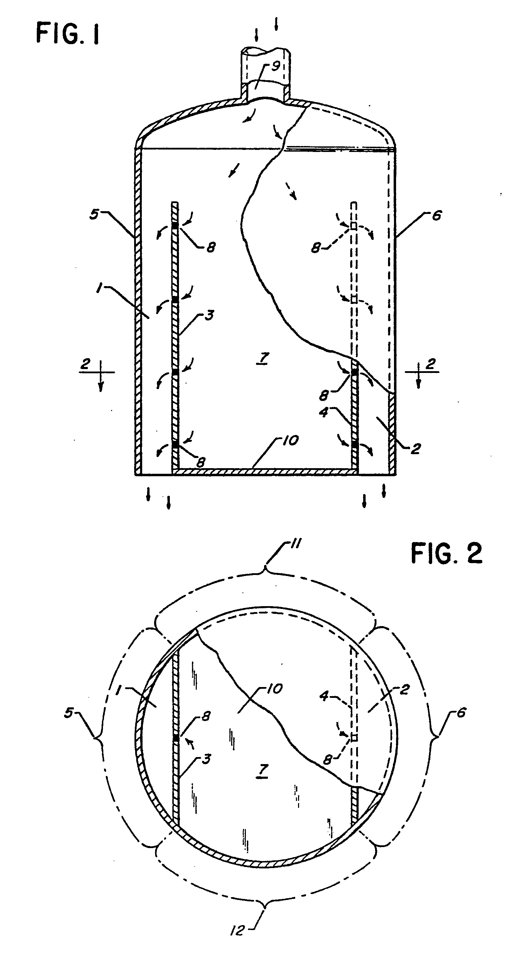

The drawings are not drawn to an accurate scale but are presented solely in illustration of the apparatus of this invention, and of its utility with respect to the conversion of a periodic discharge of hot regenerated catalyst particles from a moving bed regenerator column to a substantially steady state flow. Taken together, Fig. 1 and 2 show a pair of chordal-form catalyst passageways 1 and 2 which are defined by a pair of chordal baffles 3 and 4 and the peripheral side-walls 5 and 6 which are not common to the central catalyst hold-up chamber 7. Horizontally opposed outlet means or ports 8 through which the catalyst particles flow from the central catalyst hold-up chamber 7 into the catalyst passageways 1 and 2 are also shown. Fig. 1 further illustrates an inlet port 9 through which catalyst particles are periodically discharged into the central catalyst hold-up chamber 7. The lower peripheral surface of the flow dampener apparatus comprises a horizontal plate 10 attached to the lower periphery of said chordal baffles and extending between the lower periphery of the side-walls 11 and 12 which are not common to said catalyst passageways 1 and 2.

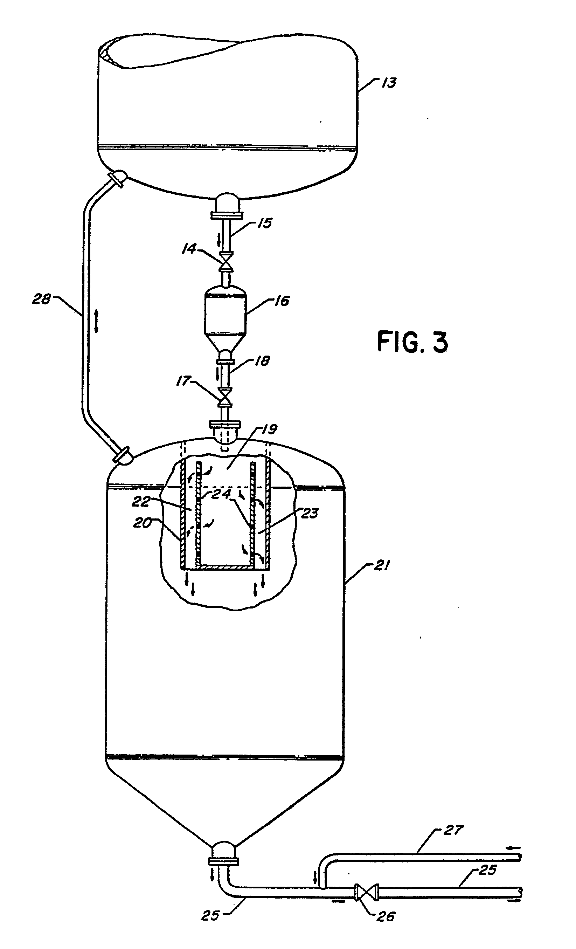

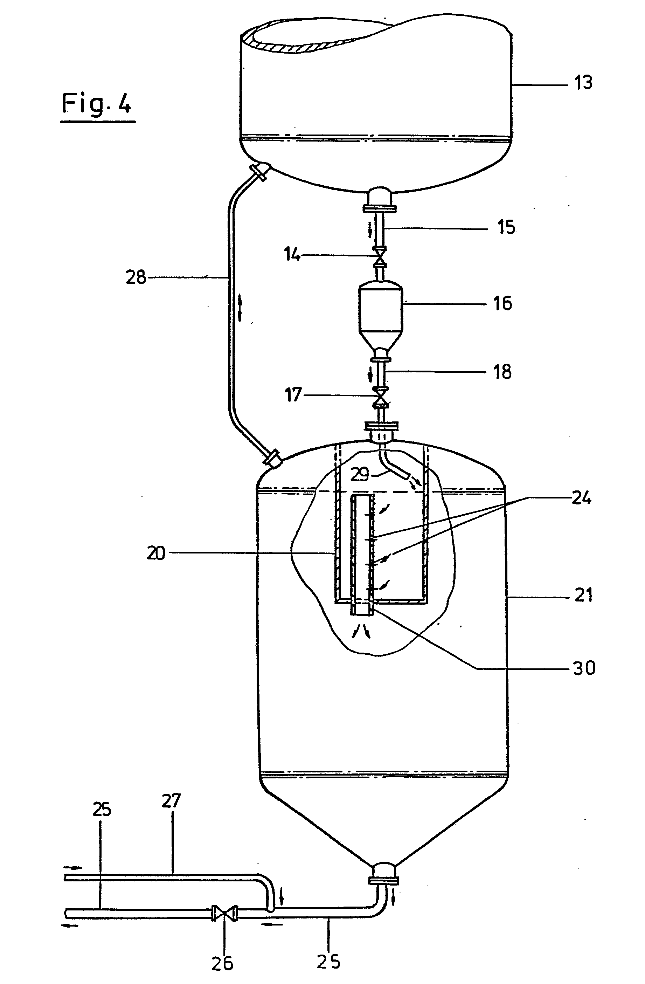

The method according to the invention is illustrated by Fig. 3 and 4.

In Fig. 3 there is shown a portion of the lower or drying section of a moving bed regenerator column 13. Typically, the catalyst particles subjected to moving bed regeneration in the manner herein contemplated will be an alumina-supported platinum catalyst quite spherical in form with a particle diameter in the 0.8 to 3.2 mm range to provide free-flow characteristics not given to bridging or blocking of the descending moving bed system. The hot regenerated catalyst particles are withdrawn from the bottom of said regenerator column 13 through a control valve 14 in conduit 15. The particles are collected in an intermediate flow control hopper 16 having a capacity for about 15 600 cm³ of said particles, and said hopper is filled to capacity. Control valve 14, and control valve 17 located in line 18, are programmed to alternate between the open and closed positions on a 60-second cycle, with control valve 17 remaining in the open position for about 15—30 seconds of said cycle to discharge the measured volume of catalyst particles into the central catalyst hold-up chamber 19 of the flow dampener 20 by way of line 18 while control valve 14 is in the closed position. The periodic discharge of the hot catalytic particles into the flow dampener 20 will not create any substantial pressure surge therein. This follows from the fact that the flow dampener vapors will achieve but not exceed the temperature of the hot particles containing therein; that the flow dampener itself affords little opportunity for any substantial heat loss—a condition which can of course be optimized with added insulation; and from the fact that the flow dampener has only a bottom-located outlet to the catalyst hopper whereby the hot vapors, by reason of their relatively low density, will be trapped in the dampener at a substantially steady-state temperature not conductive to pressure surges.

As heretofore stated, said flow dampener 20 is situated inside a catalyst hopper 21 of substantially larger volume. The hopper is an integral part of the moving bed system and functions as a reservoir from which catalyst particles are recycled to the reforming reactors which are not shown. The catalyst hopper is of a volume to receive the entire catalyst inventory of the moving bed regenerator during periods of shutdown to accomplish, for example, routine plant maintenance. During normal periods of operation, the catalyst level in the surge hopper is indicative of the catalyst attrition rate, and of the need for additional catalyst to the system. In any case, the flow dampener comprises the aforementioned catalyst hold-up chamber 19, catalyst passageways 22 and 23, and a plurality of horizontally opposed and vertically spaced apart catalyst outlet means 24. In the present illustration, four horizontally opposed pairs of outlet means are shown, the lowermost pair being sized to accommodate, in combination, a particle flow rate which is 50% of the average rate at which the catalyst particles are discharged into the catalyst hold-up chamber 19. For example, since about 15 600 cm$^3$ of catalyst particles are discharged into the catalyst hold-up chamber per minute, the lowermost outlet means are sized to accommodate, in combination, about 7800 cm$^3$ per minute. The vertical distance between the lower outlet pair and the outlet pair immediately above is such as to provide a minimum particle retention volume between said outlet pairs which is substantially equal to the flow control hopper volume. It will be appreciated that, under normal conditions of operation, only one additional opposed pair of outlet means is in use when the flow control hopper 16 is emptied into the flow dampener. Each of the three upper opposed pairs of outlet means is sized to accommodate, in combination, a particle flow which is 25% of the average rate at which said particles are discharged into the central catalyst hold-up chamber, and the vertical distance between said upper opposed pair is substantially as described with respect to the two lower opposed pairs of outlet means. The flow control dampener will thus function properly at any flow rate between 50% and 125% of the designed particle discharge rate from said regenerator column. The described flow dampener will convert the periodic flow of catalyst particles from the flow control hopper into a continuous flow into the catalyst hopper with only a 25% fluctuation in the flow rate. This is nevertheless quite sufficient to avoid any undue temperature fluctuation in the catalyst hopper and to substantially obviate any consequent pressure surge. The upper periphery of the chordal baffles is a finite vertical distance below the peripheral upper surface of the flow dampener to provide for particle overflow whenever plant maintenance requires dumping of the catalyst particles into the catalyst hopper at higher than design flow rate.

As heretofore mentioned, catalyst particles are recycled from the catalyst hopper to the reforming reactors, which are not shown. Said particles are withdrawn from the surge hopper through the line 25 and a control valve 26. A nitrogen purge stream is provided to the catalyst hopper by way of line 27. Line 28 is a pressure equalizer line through which the catalyst hopper is vented to the regenerator column to facilitate a controlled transfer of particles from said column to said catalyst hopper.

A further description of this invention is presented with reference to the attached Fig. 4 representing another embodiment of the invention. In the drawing, there is shown a portion of the lower or drying section of a moving bed regenerator column 13. Typically, the catalytic particles subjected to moving bed regeneration in the manner herein contemplated will be an alumina-supported platinum catalyst quite spherical in form with a diameter in the 0.8 to 3.2 mm range to provide free-flow characteristics not given to bridging or blocking of the descending moving bed system. The hot regenerated catalytic particles are withdrawn from the bottom of said regenerator column 13 through conduit 15 and a control valve 14 into a flow control hopper 16 having a capacity of about 15 600 cm$^3$, and said flow control hopper is filled to capacity. Control valve 14 and control valve 17 are programmed to alternate between the open and the closed positions on a 60-second cycle, with control valve 17 remaining in the open position for about 15—30 seconds of said cycle to discharge the measured volume of catalyst particles from the flow control hopper 16 into the flow dampener 20 through conduit 29 while control valve 14 is in the closed position. The periodic discharge of the hot catalytic particles into the flow dampener 20 will not create any substantial pressure surge therein. This follows from the fact that the flow dampener vapors will achieve but not exceed the temperature of the hot particles contained therein; that the flow dampener itself affords little opportunity for any substantial heat loss—a condition which can of course be optimized with added insulation; and from the fact that the flow dampener has only a bottom-located outlet to the catalyst hopper whereby the hot vapors, by reason of their relatively low density, will be trapped in the dampener at a substantially steady-state temperature not conducive to pressure surges.

In accordance with the present invention, said flow dampener 20 is situated inside a catalyst hopper 21 of substantially larger volume. The hopper is an integral part of the moving bed system and functions as a reservoir from which catalyst particles are recycled to the reforming reactors which are not shown. The catalyst hopper is of a volume to receive the entire catalyst inventory of the moving bed regenerator during periods of shut-down to accomplish, for example, routine plant maintenance. During normal periods of operation, the catalyst level in the surge hopper is indicative of the catalyst attrition rate, and of the need for adding catalyst to the system. In any case, the flow dampener 20 embodies an open-ended standpipe 30 containing a plurality of vertically spaced apart outlet means 24. In the present illustration, four outlet means are shown, the lowermost being sized to accommodate a particle flow rate which is 50% of the average rate at which the catalyst particles are discharged into the flow dampener 20. For example, since about 15 600 cm³ of catalyst particles are discharged into the flow dampener every minute, the lowermost outlet means is sized to accommodate about 7800 cm³ per minute. The vertical distance between the lowermost outlet means and the outlet means immediately above is such as to provide a particle retention volume between said outlet means which is equal to or larger than the flow control hopper volume. It will be appreciated that, under normal conditions of operation, only one additional outlet means is in use when the flow control hopper 16 is emptied into the flow dampener. The upper three outlet means are each sized to accommodate a particle flow of 25% of the average rate at which said particles are discharged into the flow dampener, and the vertical distance between said upper outlet means is substantially as described with respect to the two lower outlet means. The flow control dampener will thus function properly at any flow rate between 50% and 125% of the designed average particle discharge rate from said regenerator column. The described flow dampener will convert the periodic flow of catalyst flow particles from the flow control hopper into a continuous flow into the catalyst hopper with only about 25% fluctuation in the flow rate. This is nevertheless quite sufficient to avoid any undue temperature fluctuation in the catalyst hopper and to substantially obviate any consequent pressure surge. The standpipe 30 is open at the top to provide for particle overflow whenever plant maintenance requires rapid dumping of the catalyst particles into the catalyst hopper.

As heretofore mentioned, catalyst particles are recycled from the catalyst hopper 21 to the reforming reactors, which are not shown. Said particles are withdrawn from the catalyst hopper 21 through line 25 and a control valve 26. A nitrogen purge stream is provided to the catalyst hopper by way of line 27. Line 28 is a pressure equalizer line through which the catalyst hopper is vented to the regenerator column 13 to facilitate a controlled transfer of particles from said column to said catalyst hopper.

From the foregoing, it is apparent that the present invention embodies a relatively simple flow dampener device effecting a substantially steady and continuous flow of hot catalyst particles into the catalyst hopper, and a substantially steady-state heat transfer from the particles to the catalyst hopper vapors. In this manner, pressure fluctuations originating in the catalyst hopper and reflected as excessive temperature in the regenerator column are substantially obviated, as is the catalyst damage commonly associated therewith.

## Claims

1. A method for the recovery of hot regenerated catalyst particles from a moving bed regenerator column (13) by periodical discharge of a measured volume of said hot particles from said regenerator column (13) into an enclosed flow dampener (20) situated inside a catalyst hopper (21) of substantially larger volume, characterized in that the used flow dampener (20) comprises a catalyst hold-up chamber (7) and a bottom-located outlet means to said catalyst hopper (21), said catalyst hold-up chamber (7) being in open communication with said bottom-located outlet means through a plurality of vertically spaced-apart outlet means (8, 24), the outlet means (8, 24) in any substantially horizontal plane being sized to accommodate up to 50% of the average rate at which said hot particles are discharged into said catalyst hold-up chamber (7), said vertically spaced apart outlet means (8, 24) being vertically spaced apart to provide a minimum particle hold-up volume substantially equal to the aforesaid measured volume periodically discharged into said catalyst hold-up chamber (7).

2. A flow dampener suitable for the use in the method of claim 1, characterized in that it comprises a catalyst hold-up chamber (7) and a bottom-located outlet means, said catalyst hold-up chamber (7) being in open communication with said bottom-located outlet means through a plurality of vertically spaced-apart outlet means (8, 24), the outlet means (8, 24) in any substantially horizontal plane being sized to accommodate up to 50% of the average rate at which said hot particles are discharged into said catalyst hold-up chamber (7), said vertically spaced apart outlet means (8, 24) being vertically spaced apart to provide a minimum particle hold-up volume substantially equal to the aforesaid measured volume periodically discharged into said catalyst hold-up chamber (7).

3. The flow dampener according to claim 2, characterized in that said catalyst hold-up chamber (7) of said flow dampener (20) comprises an open-ended standpipe (30) containing the plurality of vertically spaced apart outlet means (24).

4. The flow dampener of claim 3, characterized in that said standpipe (30) comprises four vertically spaced apart outlet means (24), the lowermost of which is sized to accommodate a particle flow rate 50% of the average rate at which said particles are discharged into said flow dampener, and the remaining outlets are individually sized to accommodate a particle flow rate 25% of the average rate at which said particles are discharged into said flow dampener.

5. The flow dampener according to claim 2, characterized in that said flow dampener (20) comprises:

a) a cylindrical vessel containing a pair of chordal form catalyst passageways (1, 2) defined by the peripheral side-walls (5, 6) of said vessel and a pair of spaced apart chordal baffles (3, 4) containing the plurality of vertically spaced apart outlet means (24) and disposed on opposite sides of a plane containing the central axis of said vessel and parallel thereto, and

b) a central catalyst hold-up chamber (7) for receiving said periodic particle discharge and defined by said chordal baffles (3, 4) and the peripheral side-walls (11, 12) of said vessel which are not in common with said chordalform catalyst passageways (1, 2), the upper periphery of said chordal baffles (3, 4) being a finite vertical distance below the peripheral upper surface of said vessel and the lower peripheral surface of said vessel consisting of a horizontal plate (10) attached to the lower periphery of said chordal baffles (3, 4) and extending between the lower periphery of said side-walls (11, 12) not common to said chordal-form catalyst passageways (1, 2).

6. The flow dampener of claim 5, characterized in that said chordal baffles (3, 4) contain four horizontally opposed pairs of the vertically spaced apart outlet means (8, 24), the lowermost pair of horizontally opposed outlet means (8, 24) being sized to accommodate, in combination, 50% of the average flow rate at which said catalyst particles are discharged into said catalyst hold-up chamber (7), and each of the remaining pairs of horizontally opposed outlet means (8, 24) being sized to accommodate a particle flow rate 25% of the average rate at which said particles are discharged into said catalyst hold-up chamber (7).

**Patentansprüche**

1. Verfahren zur Gewinnung heißer regenerierter Katalysatorteilchen aus einer Wanderbettregeneratorsäule (13) durch periodisches Abziehen eines bemessenen Volumens dieser heißen Teilchen aus der Regeneratorsäule (13) in einer eingeschlossenen Strömungsdämpfer (20), der in einem Katalysatortrichter (21) von wesentlich größerem Volumen angeordnet ist, dadurch gekennzeichnet, daß der verwendete Strömungsdämpfer (20) eine Katalysatorverweilkammer (7) und einen am Boden angeordneten Auslaß zu dem Katalysatortrichter (21) aufweist, wobei die Katalysatorverweilkammer (7) mit dem am Boden angeordneten Auslaß über mehrere vertikal voneinander beabstandete Auslässe (8, 24) in offener Verbindung steht, die Auslässe (8, 24) in jeder im wesentlichen horizontalen Ebene eine solche Größe besitzen, daß sie bis zu 50% der mittleren Menge, mit der die heißen Teilchen in die Katalysatorverweilkammer (7) entnommen werden, aufnehmen, und die vertikal voneinander beabstandeten Auslässe (8, 24) so vertikal voneinander beabstandet sind, daß sie ein Mindestteilchenverweilvolumen ergeben, welches im wesentlichen gleich dem oben genannten bemessenen Volumen ist, welches periodisch in die Katalysatorverweilkammer (7) abgezogen wird.

2. Stromungsdämpfer für die Verwendung bei dem Verfahren nach Anspruch 1, dadurch gekennzeichnet, daß er eine Katalysatorverweilkammer (7) und einen am Boden angeordneten Auslaß besitzt, wobei die Katalysatorverweilkammer (7) mit dem am Boden angeordneten Auslaß über mehrere vertikal voneinander beabstandete Auslässe (8, 24) in offener Verbindung steht, die Auslässe (8, 24) in jeder im wesentlichen horizontalen Ebene solche Größe besitzen, daß sie bis zu 50% der mittleren Menge je Zeiteinheit, mit der die heißen Teilchen in die Katalysatorverweilkammer (7) abgezogen werden, aufnehmen, und die vertikal voneinander beabstandeten Auslässe (8, 24) derart vertikal voneinander beabstandet sind, daß sie ein Mindestteilchenverweilvolumen im wesentlichen gleich dem oben genannten bemessenen Volumen ergeben, das periodisch in die Katalysatorverweilkammer (7) abgezogen wird.

3. Strömungsdämpfer nach Anspruch 2, dadurch gekennzeichnet, daß die Katalysatorverweilkammer (7) des Strömungsdämpfers (20) ein offenendiges Steigrohr (30) besitzt, das die mehreren vertikal voneinander beabstandeten Auslässe (24) enthält.

4. Strömungsdämpfer nach Anspruch 3, dadurch gekennzeichnet, daß das Steigrohr (30) vier vertikal voneinander beabstandete Auslässe (24) besitzt, deren unterster eine solche Größe hat, daß er eine Teilchenströmungsmenge je Zeiteinheit von 50% der mittleren Menge je Zeiteinheit, mit der diese Teilchen in den Strömungsdämpfer abgezogen werden, aufnimmt, und die restlichen Auslässe jeweils eine solche Größe besitzen, daß sie eine Teilchenströmungsmenge je Zeiteinheit von 25% der mittleren Menge je Zeiteinheit, mit der die Teilchen in den Strömungsdämpfer abgezogen werden, aufnehmen.

5. Strömungsdämpfer nach Anspruch 2, dadurch gekennzeichnet, daß der Strömungsdämpfer (20)

a) einen zylindrischen Behälter, der ein Paar sektorförmiger Katalysatordurchgänge (1, 2) enthält, die durch die peripheren Seitenwände (5, 6) des Behälters und ein Paar voneinander beabstandeter Kreissehnenprallplatten (3, 4) begrenzt ist, welche letztere die mehreren vertikal voneinander beabstandeten Auslässe (24) enthalten und an gegenüberliegenden Seiten einer Ebene, die die mittige Achse des Behälters enthält, und parallel zu dieser angeordnet sind, und

b) eine mittige Katalysatorverweilkammer (7) zur Aufnahme der periodisch abgezogenen Teilchen, die durch die Kreissehnenprallplatten (3, 4) und die peripheren Seitenwände (11, 12) des Behälters, die nicht in Übereinstimmung mit den sektorförmigen Katalysatordurchgängen (1, 2) sind, definiert ist, wobei die obere Peripherie der Kreissehnenprallplatten (3, 4) einen begrenzten vertikalen Abstand unterhalb der peripheren oberen Oberfläche des Behälters besitzt und die untere periphere Oberfläche des Behälters aus einer horizontalen Platte (10) besteht, die an der unteren Peripherie der Kreissehnenprallplatten (3, 4) befestigt ist und sich zwischen der unteren Peripherie der nicht mit den sektorförmigen Katalysatordurchgängen (1, 2) in Übereinstimmung befindlichen Seitenwände (11, 12) erstreckt, besitzt.

6. Strömungsdämpfer nach Anspruch 5, dadurch gekennzeichnet, daß die Kreissehnenprallplatten (3, 4) vier horizontal einander gegenüberliegende Paare der vertikal voneinander beabstandeten Auslässe (8, 24) besitzen, wobei das unterste Paar horizontal einander gegenüberliegender Auslässe (8, 24) eine solche Größe besitzt, daß es in Kombination miteinander 50% der mittleren Strömungsmenge je Zeiteinheit, mit der die Katalysatorteilchen in die Katalysatorverweilkammer (7) abgezogen werden, aufnehmen, und jedes der restlichen Paare horizontal einander gegenüberliegender Auslässe (8, 24) eine solche Größe hat, daß es eine Teilchenströmungsmenge je Zeiteinheit von 25% der mittleren Menge je Zeiteinheit, mit der diese Teilchen in die Katalysatorverweilkammer (7) abgezogen werden, aufnimmt.

**Revendications**

1. Un procédé pour la récupération de particules chaudes de catalyseur régénéré à partir d'une colonne (13) régénératrice à lit mobile par décharge périodique d'un volume mesuré desdites particules chaudes provenant de ladite colonne (13) régénératrice en direction d'un amortisseur d'écoulement inclus (20) situé à l'intérieur d'une trémie (21) de catalyseur de volume notablement plus grand, caractérisé en ce que l'amortisseur d'écoulement utilisé (20) comprend une chambre (7) de retenue du catalyseur et un moyen de décharge situé vers la base de ladite trémie (21) de catalyseur, ladite chambre (7) de retenue du catalyseur étant en communication ouverte avec ledit moyen de décharge situé en bas au travers d'une pluralité de moyens de décharge (8, 24) séparés les uns des autres verticalement, les moyens de décharge (8, 24) dans n'importe quel plan sensiblement horizontal étant dimensionnés de façon à recevoir jusqu'à 50% du débit moyen sous lequel lesdites particules chaudes sont déchargées à l'intérieur de ladite chambre (7) de retenue du catalyseur, lesdits moyens de décharge espacés verticalement étant écartés verticalement de façon à former un volume minimum de retenue de particules sensiblement égal au volume mesuré précité périodiquement déchargé à l'intérieur de ladite chambre (7) de retenue du catalyseur.

2. Un amortisseur d'écoulement approprié pour la mise en oeuvre du procédé de la revendication 1, caractérisé en ce qu'il comprend une chambre (7) de retenue de catalyseur et un moyen de décharge situé vers la base, ladite chambre de retenue (7) du catalyseur étant en communication ouverte avec ledit moyen de décharge situé vers la base à travers une pluralité de moyens de décharge écartés verticalement les uns des autres (8, 24), les moyens de décharge (8, 24) dans tout plan sensiblement horizontal étant dimensionnés de façon à recevoir jusqu'à 50% du débit moyen sous lequel lesdites particules chaudes sont déchargées à l'intérieur de ladite chambre (7) de retenue du catalyseur, lesdits moyens de décharge (8, 24) espacés verticalement les uns des autres étant espacés verticalement de façon à former un volume minimum de retenue de particules sensiblement égal audit volume mesuré précité périodiquement déchargé dans ladite chambre (7) de retenue du catalyseur.

3. L'amortisseur d'écoulement selon la revendication 2, caractérisé en ce que ladite chambre de retenue (7) du catalyseur dudit amortisseur (20) d'écoulement comprend un conduit (30) se dressant debout ouvert à ses extrémités présentant la pluralité des moyens (24) de décharge espacés verticalement les uns des autres.

4. L'amortisseur d'écoulement selon la revendication 3, caractérisé en ce que ledit conduit (30) se dressant debout comprend quatre moyens de décharge (24) espacés verticalement les uns des autres, le moyen le plus bas étant dimensionné de façon à recevoir un débit d'écoulement de particules de 50% du débit moyen sous lequel lesdites particules sont déchargées à l'intérieur dudit amortisseur d'écoulement, et les autres moyens de décharge étant chacun dimensionnés de façon à recevoir un débit d'écoulement de particules de 25% du débit moyen sous lequel lesdites particules sont déchargées à l'intérieur dudit amortisseur d'écoulement.

5. L'amortisseur d'écoulement selon la revendication 2, caractérisé en ce que ledit amortisseur d'écoulement (20) comprend:

a) un récipient cylindrique contenant une paire de chemins de passage (1, 2) pour le catalyseur formant résonateurs définis par les parois latérales périphériques (5, 6) dudit récipient et une paire de cloisons ou baffles (3, 4) d'accord écartées l'une de l'autre contenant la pluralité des moyens de décharge (24) espacés verticalement les uns des autres et disposées de chaque côté d'un plan contenant l'axe central dudit récipient et parallèle à elles, et

b) une chambre (7) centrale de retenue du catalyseur recevant ladite décharge périodique de particules et définie par lesdites cloisons d'accord (3, 4) et les parois latérales périphériques (11, 12) dudit récipient qui ne sont pas communes auxdits chemins de passage (1, 2) du catalyseur en forme de résonateurs, la périphérie supérieure desdites cloisons d'accord (3, 4) étant à une distance finie verticale en-dessous de la surface supérieure périphérique dudit récipient, et la surface périphérique inférieure dudit récipient étant constituée par une plaque horizontale (10) fixée à la périphérie inférieure desdites parois d'accord (3, 4) et s'étendant entre la périphérie inférieure desdites parois latérales (11, 12) qui n'est pas commune auxdits chemins de passage (1, 2) du catalyseur formant résonateurs.

6. L'amortisseur d'écoulement selon la revendication 5, caractérisé en ce que lesdites parois d'accord (3, 4) comprennent quatre paires de moyens de décharge (8, 24) espacés les uns des autres verticalement opposées horizontalement, la paire inférieure des moyens de décharge opposés horizontalement (8, 24) étant dimensionnée de façon à recevoir, en combinaison, 50% du débit d'écoulement moyen sous lequel lesdites particules de catalyseur sont déchargées dans ladite chambre (7) de retenue du catalyseur, et chacune des autres paires des moyens de décharge horizontalement opposés (8, 24) étant dimensionnée de façon à recevoir un débit d'écoulement de particules égal à 25% du débit moyen sous lequel lesdites particules sont déchargées à l'intérieur de ladite chambre (7) de retenue du catalyseur.

# FIG. 1

# FIG. 2

FIG. 3

Fig. 4